# EUROPEAN PATENT SPECIFICATION

(11) **EP 3 459 810 B1**
(45) Date of publication and mention of the grant of the patent: **14.09.2022**
(21) Application number: 17193141.3
(22) Date of filing: 26.09.2017
(51) Int. Cl.: B61L 27/57, G06N 20/00, B61L 15/00, G05B 23/02

(54) **METHOD FOR PREDICTING A FAILURE OF A SENSOR**
VERFAHREN ZUR VORHERSAGE DES AUSFALLS EINES SENSORS
PROCÉDÉ PERMETTANT DE PRÉDIRE UNE DÉFAILLANCE DE CAPTEUR

(43) Date of publication of application: 27.03.2019
(73) Proprietor: Siemens Mobility GmbH, 81739 München (DE)
(72) Inventor: Ferroni, Francesco, 81379 München (DE)

(56) References cited:
- US-B1- 6 456 908
- KAUSCHKE SEBASTIAN ET AL: "Predicting Cargo Train Failures: A Machine Learning Approach for a Lightweight Prototype", 21 September 2016 (2016-09-21), ECCV 2016 CONFERENCE; [LECTURE NOTES IN COMPUTER SCIENCE; LECT.NOTES COMPUTER], SPRINGER INTERNATIONAL PUBLISHING, CHAM, PAGE(S) 151 - 166, XP047359213, ISSN: 0302-9743 ISBN: 978-3-642-33485-6 [retrieved on 2016-09-21] * the whole document *

## Description

### Field of the Invention

The present invention relates to a method for predicting a failure of at least one sensor (prediction method) according to claim 1. Moreover, the present invention further relates to a computer program according to claim 13 and to a computer-readable storage medium according to claim 14.

### Background to the Invention

Modern trains operating in modern railway systems are subjected to challenging demands, like travelling with high speed, over long durations and distances as well as having a long service life. Hence, the train and its components need to withstand all kinds of operating conditions, like frequent changes of speed e.g. due to stopping or passing a railway station, train stops at stop signs, speed limits e.g. at bridges or tunnels, (bad) weather and thus temperature changes. Hence, supervising the train and especially important and probably stressed components of the train is essential to ensure a secure operation of the railway system.

In today's railway systems a driver of a train is provided with information about the train and the track or path the train is to follow by several train-borne and external (not-train-borne) systems. For this the so-called European Train Control System (ETCS) is employed. ETCS is a signalling, controlling and train protection system. ETCS requires standard trackside equipment and a standard controller within the train cab. In its final form, all lineside information is passed to the driver electronically, removing the need for lineside signals which, at high speed, could be almost impossible to see or assimilate. For example, speed measurements are used as part of the automatic train protection. Thus, it has to be accurate and reliable.

It is known that the train cab controller relies on train speed measurements, performed, for example, by an array of radar sensors. These radar sensor systems are complex and already have an internal diagnostic system, which looks at the quality of signals measured. However, these sensors can be prone to failure and replacing them is expensive, since the system needs to be removed from the train and sent to a specialist location for repair. The ETCS control unit has a diagnostic system in place, which is capable of understanding when a sensor has failed. However, this only allows arranging counter measures after the failure already occurred. This may cause delays or cancellations of scheduled trains, unplannable maintenance work and consequently may result in a loss of profits.

Kauschke Sebastian et al: "Predicting Cargo Train Failures: A Machine Learning Approach for a Lightweight Prototype", 21 September 2016, ECCV 2016 CONFERENCE; LECTURE NOTES IN COMPUTER SCIENCE, SPRINGER INTERNATIONAL PUBLISHING, PAGES 151-166 discloses a method for predicting a failure of at least one component of a cargo train. Input data for a machine learning system comprises discrete conditional information of the at least one component at several time points at which the discrete conditional information of the at least one component has changed. Said input data is evaluated by using the machine learning system and thus a failure of the at least one component is predicted by using the machine learning system.

US 6 456 908 B1 refers to a system for detecting a failure of a speed sensor.

It is a first objective of the invention to provide a method for predicting a failure of at least one sensor with which the above-mentioned shortcomings can be mitigated, and especially, to provide a method that is more flexible and foresighted as the system known from the prior art as well as a method that provides more safety than known systems.

Further, it is a second object of the invention to provide an advantageous method for a failure prediction of several sensors.

Furthermore, it is a third objective of the present invention to provide a method for training a machine learning system used in the prediction method that allows a quick and independent execution of the prediction method.

In addition, it is a fourth and fifth objective of the present invention to provide a computer program and a computer-readable storage medium to allow a computer to advantageously carry out the steps of the prediction method.

### Summary of the Invention

Accordingly, the present invention provides a method for predicting a failure of at least one sensor according to claim 1.

Due to the inventive method it can be provided to preemptively know when the sensor is starting to fail or give problems. Moreover, maintenance work can be planned in advance and it can be ensured that spare parts are available when needed. Additionally, down time of a system in which the sensor is employed can be minimized so that costs and time can be saved as well as possible penalties due to a not working or erroneous system can be prevented. Furthermore, the reliability and safety of the sensor or the system in which the sensor is employed can be enhanced in comparison with state of the art systems.

Even if a chosen term is used in the singular or in a specific numeral form in the claims and the specification the scope of the patent (application) should not be restricted to the singular or the specific numeral form. It should also lie in the scope of the invention to have more than one or a plurality of the specific structure(s).

The sensor may, for example, monitor a mobile unit or a part thereof. Hence, the sensor may be an on-board or an external (landside) sensor. Moreover, the sensor may be arranged at the mobile unit. The mobile unit might be any unit, especially constructed unit, like a motor vehicle (car, motor cycle, bicycle, van, lorry, bus, train) that can be moved, especially by human manipulation. Preferably, it may be a track-bound vehicle. A track-bound vehicle is intended to mean any vehicle feasible for a person skilled in the art, which is, due to a physical interaction with a track, especially a pre-determined track, restricted to this track or path. A physical interaction/connection should be understood as a form fit connection, an electrical connection or a magnetic connection. The physical connection might be releasable. In this context a "pre-determined track" is intended to mean a beforehand existing, human-built track or path comprising selected means building or forming the track, like a rail or a cable. Preferably, the pre-determined track is a subway track or a railway track, like the UK, German or Russian mainline railway.

The vehicle may be a train, an underground railway, a tram or a trolley bus. Preferably, the track-bound vehicle may be a train. Advantageously, the track-bound vehicle or the train may be a high speed train. Thus, the method can be used for a network in which a high level of security is essential and needed. The track-bound vehicle may be also referred to as vehicle or train in the following text.

The sensor may be a part of an array of sensors, wherein all sensors of the array operate according to the same principle. The sensor is selected out of the group consisting of: A radar sensor and a laser measurement device. Preferably, the at least one sensor may be a radar sensor. Hence, the method can be used to monitor a sensor needed for high security and reliability of a railway network. Preferably, the sensor measures at least one parameter, wherein the parameter may be any parameter feasible for a person skilled in the art and may be, for example, a parameter selected out of the group consisting of: A velocity, an acceleration, a temperature, a pressure, humidity, visibility (e.g. the influence of fog) and a location. Preferably, the parameter may be a velocity or speed.

The predicted failure may be any failure feasible for a person skilled in the art, like an intrinsic failure or an extrinsic failure. An intrinsic failure of the sensor may, for example, be a falling out, a mismeasurement or a delayed response of the sensor. An extrinsic failure may be, for example, a fouling or blocked connection of the sensor. Preferably, the failure may be an intrinsic failure of the sensor.

In a preferred embodiment of the invention the machine learning system is trained by a method selected out of the group consisting of: Supervised learning, semi-supervised learning, unsupervised learning, reinforcement learning and active learning. Advantageously, the machine learning follows the principles of supervised learning (details see below).

In this context "discrete conditional information of the sensor" should be understood as an information or statement referring to the monitored/measured parameter or its quality or strength. This information may be an output like "YES", "NO", "HIGH", "LOW", "RED" and "GREEN" etc. Furthermore the discrete conditional information refer to a signal strength of the sensor. Hence, the output of the sensor can be validated. Preferably, the discrete conditional information may refer to a signal strength of the sensor in an operational mode of the sensor. Thus, pre-set requirements can be controlled. The conditional mode of the sensor may be any mode feasible for a person skilled in the art, like single or dual mode, day light mode, night mode etc. Preferably, the operational mode is selected out of the group consisting of: a single mode, a low quality single mode, a high quality single mode, a dual mode, a low quality dual mode, a high quality dual mode and an unknown mode. Hence, the method can be employed to monitor a sensor output in reference with pre-set requirements.

In this context a "time point" is intended to means a measure point or a determination point. A time point should also be understood as a mileage or distance point. In other words, the discrete conditional information is obtained at a first point and at a second point, wherein the first and second points are different in there time stamp or the travelled mileage/distance. The phrase "the time points at which the discrete conditional information of the sensor has changed" should be understood in that the sensor signal at a first time point is different for the sensor signal at a second time point. Hence, in-between these two time points the condition of the sensor changed or started to change.

Moreover, not only the sensor signal in itself may change (Question: Is there a sensor signal? Answer: "YES" or "NO") but also the transmitted information of the sensor signal (Question: Is the strength of the sensor signal higher than a pre-set value? Answer: "YES" or "NO").

In a further embodiment of the invention, the method may comprise the further steps of: Counting of a number of state changes of the discrete conditional information of the at least one sensor and using the number of state changes of the discrete conditional information of the at least one sensor as - further - input data for the machine learning system. Hence, the machine learning system is - also - evaluating the number of state changes. Thus, the prediction can be further refined. A high number of state changes in a short time or travelled mileage show that states are changing very quickly in time (flickering) as opposed to a constant state.

According to a further refinement of the invention the method comprises the further steps of: Generating at least one statistical derivative from the input data and using the at least one statistical derivative from the input data as further input data for the machine learning system. Thus, the machine learning system is also evaluating the statistical derivatives for predicting the failure of the sensor. Hence, in case of reduced suitable input/raw data the method can be advanced by using (a) derivative(s) of the raw data. The derivative may be generated my any method or statistical measure feasible for a person skilled in the art and may be, for example, mean deviation, standard deviation, median, 25 % and 75 % quantiles or burstiness. The used input data may be the discrete conditional information of one sensor taken at different time windows/points (6 hours (h), 12 h, 24 h, 2 days(d), 3 d etc.) or travelled distances (1 metre (m), 500 m,1 kilometre (km), 10 km etc.).

A further embodiment of the invention refers to a prediction method for a failure prediction of at least one sensor of several sensors comprising a first sensor and at least a second sensor.

It is proposed that the method comprises at least the steps of: Providing as input data for the machine learning system discrete conditional information of the first sensor at several time points, providing as input data for the machine learning system discrete conditional information of the at least second sensor at the same several time points (as the several time points of the first sensor), wherein the time points are such time points at which the discrete conditional information of at least one sensor of the first sensor and the at least second sensor has changed and evaluating the input data of the first sensor and the at least second sensor by using the machine learning system and thus analysing a behaviour of the first sensor and the at least second sensor.

Due to the inventive matter a behaviour of a sensor can be validated easily. Moreover, the prediction can be made in dependence of a behaviour of a second sensor and hence further refining the prediction.

According to a further realisation of the invention the method comprises at least the further step of: Analysing an intrinsic failure or an extrinsic failure of at least one of the sensors of the several sensors by performing a crosswise comparative between the discrete conditional information of the first sensor and the discrete conditional information of the at least second sensor at the same time points and thus determining if an intrinsic failure or an extrinsic failure effected the first sensor and/or the at least second sensor. Hence, it can be determined if only one sensor is failing due to an intrinsic problem or if all sensors are affected, for example, due to an extrinsic or external condition, like dirt polluting all sensors and disrupting the signals of all sensors.

For example, if all sensors of the several sensors change their discrete conditional information at the same time point the possibility is very high that the problem lies not with one selected (first) sensor but that all sensors are negatively affected by an external event.

The invention further refers to a method for training the machine learning system used in the above described prediction method.

It is proposed that the training method is trained by a supervised learning algorithm. Or in other words, that the training method comprises at least the following steps: Generating of training data that comprise at least input data analogous to the input data according to the input data used in the prediction method and training the machine learning system by using the training data, wherein at least one parameter of the machine learning system is adapted.

Due to the inventive method the training can be performed effectively and quickly. Moreover, this method provides a much higher reliability of prediction in comparison with state of the art methods.

The machine learning system may work according to any method or any classification algorithm feasible for a person skilled in the art, and may be selected out of the group consisting of: Linear classifier (Fisher's linear discriminant, Logistic regression, Naive Bayes classifier, Perceptron), Support vector machines (Least square support vector machines), Quadratic classifiers, Kernel estimation (k-nearest neighbour), Boosting, Decision trees (Random forests), Neural networks, FMM Neural Networks, Learning vector quantization and Gaussian mixture models.

Preferably, the machine learning system may work according to an extreme gradient boosted tree predictor. Hence, a suitable prediction can be performed.

According to a further aspect of the invention at least one data sampling method is executed on the training data or used by the training algorithm, wherein the method is selected out of the group consisting of: Upsampling, especially via a SMOTE algorithm, random downsampling (of a normal situation) and preferential sample weighting (to a rare event). By generating further training data synthetically and statistically the training data pool can be advantageously enlarged providing better training result.

The present invention also refers to computer program comprising instructions which, when the program is executed by a computer, cause the computer to carry out the steps of the prediction method. The present invention also refers to a computer-readable storage medium comprising instructions which, when executed by a computer, cause the computer to carry out the steps of the prediction method.

Due to these inventive matters the prediction can be performed automatically and thus saving time and man power.

The invention and/or the described embodiments thereof may be realised - at least partially or completely - in software and/or in hardware, the latter e.g. by means of a special electrical circuit.

Further, the invention and/or the described embodiments thereof may be realised - at least partially or completely - by means of a computer readable medium having a computer program, which computer program, when executed on a computer, realises the method according to the invention and/or according to the embodiments thereof.

The previously given description of advantageous embodiments of the invention contains numerous features which are partially combined with one another in the dependent claims.

The above-described characteristics, features and advantages of the invention and the manner in which they are achieved can be understood more clearly in connection with the following description of exemplary embodiments which will be explained with reference to the drawings. The exemplary embodiments are intended to illustrate the invention, but are not supposed to restrict the scope of the invention to combinations of features given therein, neither with regard to functional features.

The scope of the invention is defined by the appended claims.

### Brief Description of the Drawings

The present invention will be described with reference to drawings in which:
- FIG 1:: shows schematically a mobile unit with several sensors for measuring a speed of the mobile unit travelling on a track as well as a prediction system for predicting a failure of a sensor,
- FIG 2:: shows a block-diagram of an operational strategy of the prediction method,
- FIG 3:: shows a table listing results of a failure prediction versus an actual occurrence of failures for a training set and a test set and
- FIG 4:: shows two Receiver Operating Characteristic Curves (ROC curve) for the sets from the table in FIG 3.

### Detailed Description of the Illustrated Embodiments

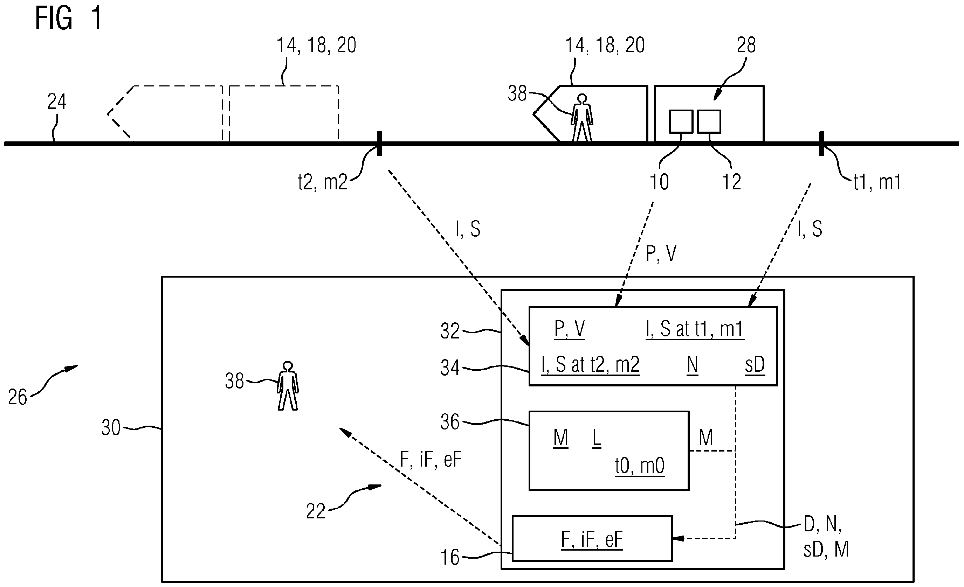

FIG 1 shows in a schematically view a pre-determined track 24 of a railway system 26, like, for example, the German or Russian mainline railway or Munich subway. Moreover, FIG 1 shows a mobile unit 14, like a track-bound vehicle 18, e.g. a train 20 in the form of a high speed train 20, being moveable on the pre-determined track 24. In the following text the terms mobile unit 14, vehicle 18 and train 20 will be used synonymously.

As part of the so-called European Train Control System (ETCS) the train 20 comprises several radar sensors 10, 12 or a sensor array 28 with a first sensor 10 and a second sensor 12. The sensors 10, 12 measure a parameter P of the mobile unit 14 and especially the speed or velocity V of the mobile unit 14.

The railway system 26 further has a control centre 30 that comprises a computer 22 equipped with an appropriate computer program that comprises instructions which, when executed by the computer 22, cause the computer 22 to carry out the steps of a prediction method. Alternatively, the computer 22 may be located on board of the train 20. The proposed method provides a method for predicting a failure F of at least one of the sensors 10, 12 (details see below).

Normally, several sensors 10, 12 measure the speed simultaneously. In this specification one sensor 10 alone will be examined or explained exemplarily as an active sensor in the measuring process and the failure prediction. The second sensor 12 will be viewed as a passive element. However, since normally several sensors 10, 12 measure the velocity V individually and thus each may fail the prediction may be done for each sensor 10, 12.

Moreover, the control centre 30 comprises as part of the computer 22 a prediction system 32 comprising as an evaluating device a machine learning system 16 for performing the method for predicting a failure F of the sensor 10. Therefore, the prediction system 32 further comprises a receiving device 34 to receive as input data D discrete conditional information I of the sensors 10, 12 at several time points t1, t2. The receiving device 34 is a processing device. Moreover, it comprises a storage device 36 for storage of parameters, like an operational mode M of the sensor 10, 12, a boundary condition or limit L for a strength of the sensor signal or historic data, like sensor information at historical time points t0 or a historical mileage m0.

The control centre 30 may be supervised by an operator 38 which may also receive issued outputs, like the failure prediction (details see below). The operator 38 may also be a driver of the train 20 or on-board of the train 20.

As stated above, the invention concerns a method for predicting a failure F of the sensor 10 for measuring the velocity V of the mobile unit 14.

In general, failures F were considered to be those points in time when the ETCS system reported, based on its internal diagnostic tool, when a particular radar sensor 10, 12 in the array 28 failed. Failure messages occurring very close in time after the first message (i.e. the next hour or day) were all considered to be part of the same failure F. In other words, the sensor 10, 12 had already failed, and the diagnostic system was simply reporting that the system was still not functioning.

The invention is a predictive system which can, with a good precision/recall ratio, predict the failure F occurring up to several days before an actual failure F occurs.

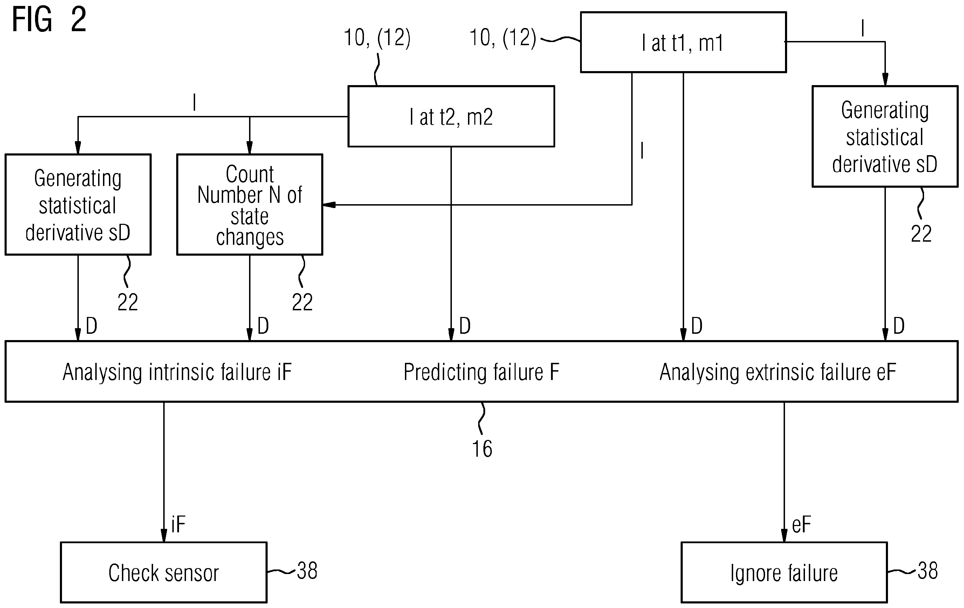

The prediction method will now be described in reference to FIG 1 and FIG 2, wherein the latter shows a block-diagram of the operational strategy of the prediction method.

The train 20 is travelling along its track 24. During that travel the sensors 10, 12 measure the speed or velocity V of the train 20 regularly, like every minute. Hence, at several time points t1, t2 or at several distance points or after a selected travelled mileage m1, m2 the sensors 10, 12 measure the velocity V and send this information to the computer 22. However, the computer 22 not only receive the measured speed value, like 150 km/h, but also discrete conditional information I of the sensor 10 at the respective time point t1, t2 or mileage m1, m2.

This discrete conditional information I refers to a signal strength S of the sensor 10. The signal strength S or a requirement the signal strength S needs to fulfil may be different and may be dependent from an operational mode M of the sensor 10 or the array 28. These operational modes M and/or their requirements or limiting values L may be stored in the storage unit 36 of the computer 22 (see FIG 1). This operational mode may, for example, be a single mode, a low quality single mode, a high quality single mode, a dual mode, a low quality dual mode, a high quality dual mode and an unknown mode (details see below). The limiting value L may be a threshold that defines what signal strength S is necessary to define the sensor 10 as working properly or as required.

For the failure prediction the discrete conditional information I at the different time points t1, t2 or mileage m1, m2 is provided for the machine learning system 16 as input data D. To predict the failure F the machine learning system 16 uses only the discrete conditional information I at time points t1, t2 at which the discrete conditional information I of the sensor 10 has changed. In other words, the time points t1, t2 are such time points at which the discrete conditional information I of the sensor 10 has changed. For example, the conditional information I is not considered in a case where at t1 the signal strength S of sensor 10 was "high" and at t2 the signal strength S was still "high" (no change). However, it is considered when at t1 the signal strength S was "high" and "low" at t2 (change between t1 und t2).

Hence, the machine learning system 16 evaluates the input data D (conditional information I or signal strength S) and predicts the failure F of the sensor 10, 12.

Further, the number N of state changes of the discrete conditional information I of the sensor 10 may be counted and also used as input data D for the machine learning system 16. Moreover, a statistical derivative sD of the input data D may be generated and also used as further input data D for the machine learning system 16. The statistical derivative sD may be generated my any method or statistical measure feasible for a person skilled in the art and may be, for example, mean deviation, standard deviation, median, 25 % and 75 % quantiles, burstiness. The used input data D may be the discrete conditional information I of the sensor 10 taken at different time windows/points t1, t2 or historical t0 (6 hours (h), 12 h, 24 h, 2 days(d), 3 d etc.) or travelled distances/mileage m1, m2 or historical mileage m0 (1 metre (m), 500 m,1 kilometre (km), 10 km etc.). The historic data may be stored in the storage device 36.

The method for training the machine learning system 16 used in the prediction method is a supervised learning approach. Specifically, a model with parameters Z is used that when given an input X (discrete conditional information I) will predict an output Y (failure F). Preferably, the machine learning system 16 works according to an extreme gradient boosted tree predictor.

Moreover, to enlarge the training data pool synthetic data generation and weighting can be done. Thus, a data sampling method can be executed on the training data. This may be, for example, Upsampling of failure situations via "SMOTE" algorithm, Random Downsampling of normal situations or Preferential sample weights to rare events.

Advantageously, the prediction method can be used for a failure prediction of one of the sensors 10 of several sensors 10, 12 or the sensor array 28 comprising one sensor as a first sensor 10 and another sensor as a second sensor 12.

The machine learning system uses as input data D discrete conditional information I of the first sensor 10 at several time points t1, t2 (and/or mileage m1, m2) and of the second sensor 12 at the same several time points t1, t2 (and/or mileage m1, m2) (see FIG 2). In this case, the time points t1, t2 are such time points at which the discrete conditional information I of one sensor 10, 12 of the array 28, like the first sensor 10, has changed. The machine learning system 16 evaluates the input data D of both sensors 10, 12 and analyses a behaviour of the first and sensor second 10, 12.

With this approach it can be determined if the failure F effecting the first sensor 10 and/or the second sensor 12 is an intrinsic failure iF or an extrinsic failure eF of the sensor(s) 10, 12. This can be done by a crosswise comparative between the discrete conditional information I of the first sensor 10 and the discrete conditional information I of the second sensor 12 at the same time points t1, t2 (and/or mileage m1, m2). If an intrinsic failure iF is detected the operator 38 may be informed or advised to check/change the sensor 10. However, if an extrinsic failure eF is detected the operator 38 can ignore the failure prediction.

The technical features of the invention are two-fold:

### 1. Appropriate data features.

Input data features (X) considered may be many (>80), but importantly (i - iv):
i. At each specific point in time t1, t2, the internal state (information I) of each sensor 10, 12 in the array 28 is considered in unison. The possible states recorded by the ETCS using are "single mode", "low quality dual mode", "high quality dual mode" and "unknown". These all refer to the strength S of the radar signal of that particular sensor 10, 12 in the array 28. However, the signal quality can be affected by the environment. So, it is important to consider the states in unison because if all sensors 10, 12 change suddenly from high quality to low quality, for example, it is likely to be an environmental effect (extrinsic failure eF), whereas if only one sensor 10 changes, it is likely to be an internal issue (intrinsic failure iF) with the sensor 10.
ii. Mileage and time between current and prior observation/state change. This means that if there are a lot of samples which have very low mileage and time features, it means the states are changing very quickly in time (flickering) as opposed to a constant state.
iii. Counters of state changes for each separate sensor 10, 12 in the array 28.
iv. Statistical measures of the previous features (conditional information I or number N of state changes) (mean, standard deviation, median, 25% and 75% quantiles, burstiness for different time windows (6 hours, 12 hours, 24 hours or 3 days).

### 2. Appropriate training model.

E.g. Extreme gradient boosted trees as predictor.

### 3. Appropriate data sampling.

Failures are extremely rare. Rare events give problems to machine learning models. So, the problem can be, for example, be attacked in three ways.
i. Upsampling of failure situations via "SMOTE" algorithm
i. Random downsampling of normal situations.
iii. Preferential sample weights to rare events.

The raw data (conditional information I) is in a log format, giving whenever a particular sensor 10, 12 changed its signal strength S from one state to another state. This log format, or any particular state in this log, does not easily correlate with the future occurrence of a failure F. However, using these many features and using a powerful predictor which is capable of looking in multidimensional space, a good predictor can be provided.

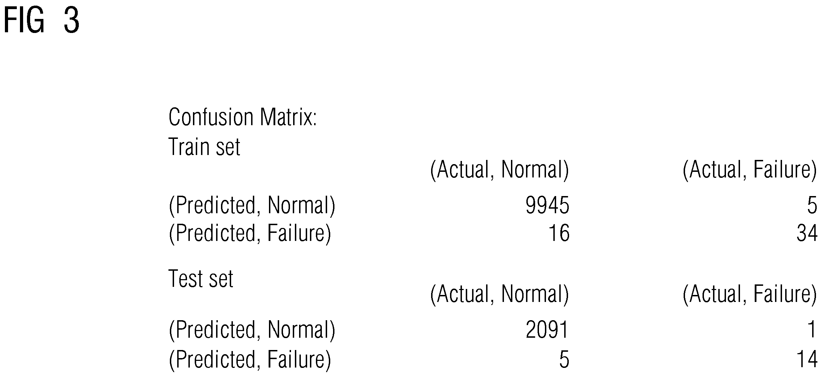

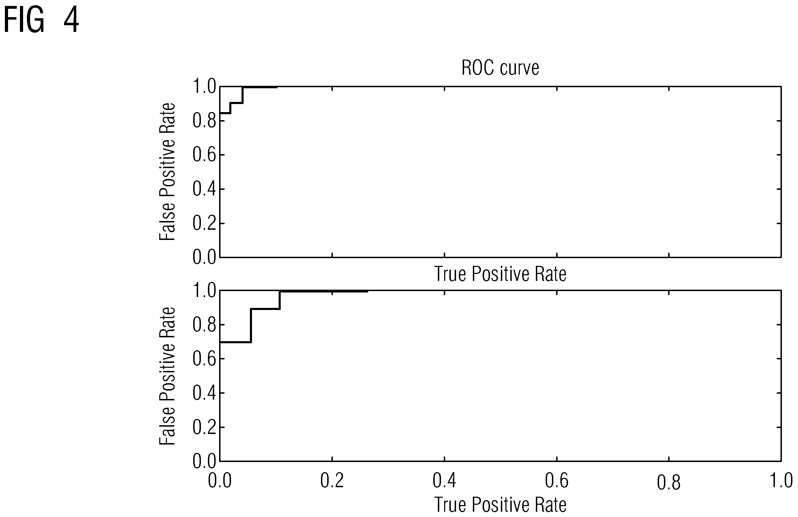

This can be seen in FIG 3 and 4, which show a table listing results of a failure prediction versus an actual occurrence of failures F for a training set and a test set and two Receiver Operating Characteristic Curves (ROC curve) for the sets from the table in FIG 3.

For the training set 10 000 samples (sum out of 9 945, 5, 16 and 34) were validated. The predictor predicted that 9 950 samples (sum out of 9 945 and 5) would be "normal" (without failure, see the upper row of the upper table section). Further, it predicted that 50 samples (sum out of 16 and 34) would show a failure (see the lower row of the upper table section).

9 945 samples of the predicted 9 950 "normal" samples were actually "normal" and thus were predicted true positive (see the upper row of the left column of the upper table section). However, 5 samples of the 9 950 samples predicted as "normal" showed a failure and thus were predicted false positive (see the upper row of the right column of the upper table section) .

16 samples of the predicted 50 "samples with failure" were "normal" and thus were predicted false negative (see the lower row of the left column of the upper table section). However, 34 samples of the 50 samples predicted as "samples with failure" showed actually a failure and thus were predicted true negative (see the lower row of the right column of the upper table section).

For the test set 2 111 samples (sum out of 2 091, 1, 5 and 14) were validated. The predictor predicted that 2 092 samples (sum out of 2 091 and 1) would be "normal" (without failure, see the upper row of the lower table section). Further, it predicted that 19 samples (sum out of 5 and 14) would show a failure (see the lower row of the lower table section).

2 091 samples of the predicted 2 092 "normal" samples were actually "normal" and thus were predicted true positive (see the upper row of the left column of the lower table section).

However, 1 sample of the 2 092 samples predicted as "normal" showed a failure and thus were predicted false positive (see the upper row of the right column of the lower table section) .

5 samples of the predicted 19 "samples with failure" were "normal" and thus were predicted false negative (see the lower row of the left column of the lower table section). However, 14 samples of the 19 samples predicted as "samples with failure" showed actually a failure and thus were predicted true negative (see the lower row of the right column of the lower table section).

These results were transferred into ROC-Curves (see FIG 4).

As could be seen in the diagrams the predictor works well, even for the test set (lower diagram).

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Although the invention is illustrated and described in detail by the preferred embodiments, the invention is not limited by the examples disclosed, and other variations can be derived therefrom by a person skilled in the art without departing from the scope of the invention as defined in the claims.

## Claims

1. Method for predicting a failure (F) of at least one sensor (10, 12), especially, for measuring at least one parameter (P) of a mobile unit (14), **characterised in that** the method comprises at least the following steps:
- providing as input data (D) for a machine learning system (16) discrete conditional information (I) of the at least one sensor (10, 12) at several time points (t1, t2), wherein the at least one sensor (10, 12) is a sensor selected out of the group consisting of: a radar sensor (10, 12) and a laser measurement device; wherein the discrete conditional information (I) refers to a signal strength (S) of the at least one sensor (10, 12), wherein these time points (t1, t2) are such time points at which the discrete conditional information (I) of the at least one sensor (10, 12) has changed and
- evaluating the input data (D) by using the machine learning system (16) and thus predicting the failure (F) of the at least one sensor (10, 12) by using the machine learning system (16).

2. Method according to claim 1, wherein the method comprises the further steps of:
- counting of a number (N) of state changes of the discrete conditional information (I) of the at least one sensor (10, 12) and
- using the number (N) of state changes of the discrete conditional information (I) of the at least one sensor (10, 12) as input data (D) for the machine learning system (16).

3. Method according to claim 1 or 2, wherein the method comprises the further steps of:
- generating at least one statistical derivative (sD) from the input data (D) and
- using the at least one statistical derivative (sD) from the input data (D) as further input data (D) for the machine learning system (16).

4. Method according to any one of the preceding claims, wherein the discrete conditional information (I) refers to a signal strength (S) of the at least one sensor (10, 12) in an operational mode (M) of the at least one sensor (10, 12), wherein the operational mode (M) is selected out of the group consisting of: a single mode, a low quality single mode, a high quality single mode, a dual mode, a low quality dual mode, a high quality dual mode and an unknown mode.

5. Method according to any one of the preceding claims, wherein
the machine learning system (16) is trained by a method selected out of the group consisting of: Supervised learning, semi-supervised learning, unsupervised learning, reinforcement learning and active learning.

6. Method according to any one of the preceding claims, wherein
the machine learning system (16) works according to an extreme gradient boosted tree predictor.

7. Method according to any one of the preceding claims, wherein
the at least one sensor (10, 12) measures at least one parameter (P), wherein the at least one parameter (P)
is a velocity.

8. Method according to any one of the preceding claims, wherein
the at least one sensor (10, 12) is a sensor of a mobile unit (14) and/or wherein the mobile unit (14) is a track-bound vehicle (18), especially a train (20).

9. Method according to any one of the preceding claims for predicting a failure (F) of at least a first sensor (10, 12) of several sensors (10, 12) comprising the first sensor (10, 12) and at least a second sensor (10, 12), wherein the method comprises at least the steps of:
- providing as input data (D) for the machine learning system (16) discrete conditional information (I) of the first sensor (10) at several time points (t1, t2),
- providing as input data (D) for the machine learning system (16) discrete conditional information (I) of the at least second sensor (12) at the same several time points (t1, t2), wherein the time points (t1, t2) are such time points at which the discrete conditional information (I) of at least one sensor (10, 12) of the first sensor (10) and the at least second sensor (12) has changed and,
- evaluating the input data (D) of the first sensor (10) and the at least second sensor (12) by using the machine learning system (16) and thus analysing a behaviour of the first sensor (10) and the at least second sensor (12).

10. Method according to claim 9, comprising at least the further step of:
- analysing an intrinsic failure (iF) or an extrinsic failure (eF) of at least one of the sensors (10, 12) of the several sensors (10, 12) by performing a crosswise comparative between the discrete conditional information (I) of the first sensor (10) and the discrete conditional information (I) of the at least second sensor (12) at the same time points (t1, t2) and thus determining if an intrinsic failure (iF) or an extrinsic failure (eF) effected the first sensor (10) and/or the at least second sensor (12).

11. Method according to at least one of claims 1 to 8, **characterised in that** the machine learning system (16) is trained by a supervised learning algorithm.

12. Method according to claim 11, wherein at least one data sampling method is executed on training data, wherein the method is selected out of the group consisting of: Upsampling, especially via a SMOTE algorithm, random downsampling and preferential sample weighting.

13. Computer program comprising instructions which, when the program is executed by a computer (22), cause the computer (22) to carry out the steps of the method of claim 1.

14. Computer-readable storage medium comprising instructions which, when executed by a computer (22), cause the computer (22) to carry out the steps of the method of claim 1.

## Patentansprüche

1. Verfahren zum Vorhersagen eines Fehlers (F) mindestens eines Sensors (10, 12), insbesondere zum Messen mindestens eines Parameters (P) einer mobilen Einheit (14), **dadurch gekennzeichnet, dass** das Verfahren mindestens die folgenden Schritte umfasst:
- Bereitstellen diskreter Zustandsinformationen (I) des mindestens einen Sensors (10, 12) zu mehreren Zeitpunkten (t1, t2) als Eingangsdaten (D) für ein System (16) zum maschinellen Lernen, wobei der mindestens eine Sensor (10, 12) ein Sensor ist, der aus der Gruppe ausgewählt ist, die aus Folgendem besteht: einem Radarsensor (10, 12) und einer Lasermessvorrichtung; wobei sich die diskreten Zustandsinformationen (I) auf eine Signalstärke (S) des mindestens einen Sensors (10, 12) beziehen, wobei diese Zeitpunkte (t1, t2) Zeitpunkte sind, zu denen sich die diskreten Zustandsinformationen (I) des mindestens einen Sensors (10, 12) geändert haben, und
- Auswerten der Eingangsdaten (D) unter Verwendung des Systems (16) zum maschinellen Lernen und somit Vorhersagen des Fehlers (F) des mindestens einen Sensors (10, 12) unter Verwendung des Systems (16) zum maschinellen Lernen.

2. Verfahren nach Anspruch 1, wobei das Verfahren die folgenden weiteren Schritte umfasst:
- Zählen einer Anzahl (N) von Zustandsänderungen der diskreten Zustandsinformationen (I) des mindestens einen Sensors (10, 12), und
- Verwenden der Anzahl (N) der Zustandsänderungen der diskreten Zustandsinformationen (I) des mindestens einen Sensors (10, 12) als Eingangsdaten (D) für das System (16) zum maschinellen Lernen.

3. Verfahren nach Anspruch 1 oder 2, wobei das Verfahren die folgenden weiteren Schritte umfasst:
- Erzeugen mindestens einer statistischen Ableitung (sD) aus den Eingangsdaten (D), und
- Verwenden der mindestens einen statistischen Ableitung (sD) aus den Eingangsdaten (D) als weitere Eingangsdaten (D) für das System (16) zum maschinellen Lernen.

4. Verfahren nach einem der vorhergehenden Ansprüche, wobei sich die diskreten Zustandsinformationen (I) auf eine Signalstärke (S) des mindestens einen Sensors (10, 12) in einer Betriebsart (M) des mindestens einen Sensors (10, 12) beziehen, wobei die Betriebsart (M) aus der Gruppe ausgewählt ist, die aus Folgendem besteht: einer Einzelbetriebsart, einer Einzelbetriebsart mit niedriger Qualität, einer Einzelbetriebsart mit hoher Qualität, einer Dualbetriebsart, einer Dualbetriebsart mit niedriger Qualität, einer Dualbetriebsart mit hoher Qualität und einer unbekannten Betriebsart.

5. Verfahren nach einem der vorhergehenden Ansprüche, wobei
das System (16) zum maschinellen Lernen durch ein Verfahren trainiert wird, das aus der Gruppe ausgewählt wird, die aus Folgendem besteht: überwachtem Lernen, teilüberwachtem Lernen, unüberwachtem Lernen, verstärkendem Lernen und aktivem Lernen.

6. Verfahren nach einem der vorhergehenden Ansprüche, wobei
das System (16) zum maschinellen Lernen gemäß einem Prädiktor eines Baumes mit extremer Gradientenverstärkung arbeitet.

7. Verfahren nach einem der vorhergehenden Ansprüche, wobei
der mindestens eine Sensor (10, 12) mindestens einen Parameter (P) misst, wobei der mindestens eine Parameter (P) eine Geschwindigkeit ist.

8. Verfahren nach einem der vorhergehenden Ansprüche, wobei
der mindestens eine Sensor (10, 12) ein Sensor einer mobilen Einheit (14) ist und/oder die mobile Einheit (14) ein schienengebundenes Fahrzeug (18), insbesondere ein Zug (20), ist.

9. Verfahren nach einem der vorhergehenden Ansprüche zum Vorhersagen eines Fehlers (F) mindestens eines ersten Sensors (10, 12) von mehreren Sensoren (10, 12), die den ersten Sensor 10, 12) und mindestens einen zweiten Sensor (10, 12) umfassen, wobei das Verfahren mindestens die folgenden Schritte umfasst:
- Bereitstellen von diskreten Zustandsinformationen (I) des ersten Sensors (10) zu mehreren Zeitpunkten (t1, t2) als Eingangsdaten (D) für das System (16) zum maschinellen Lernen,
- Bereitstellen von diskreten Zustandsinformationen (I) des mindestens einen zweiten Sensors (12) zu denselben Zeitpunkten (t1, t2) als Eingangsdaten (D) für das System (16) zum maschinellen Lernen, wobei die Zeitpunkte (t1, t2) Zeitpunkte sind, zu denen sich die diskreten Zustandsinformationen (I) mindestens eines Sensors (10, 12) des ersten Sensors (10) und des mindestens einen zweiten Sensors (12) geändert haben, und
- Auswerten der Eingangsdaten (D) des ersten Sensors (10) und des mindestens einen zweiten Sensors (12) unter Verwendung des Systems (16) zum maschinellen Lernen und somit Analysieren eines Verhaltens des ersten Sensors (10) und des mindestens einen zweiten Sensors (12).

10. Verfahren nach Anspruch 9, das mindestens den folgenden weiteren Schritt umfasst:
- Analysieren eines intrinsischen Fehlers (iF) oder eines extrinsischen Fehlers (eF) mindestens eines der Sensoren (10, 12) der mehreren Sensoren (10, 12) durch Durchführen eines kreuzweisen Vergleichs zwischen den diskreten Zustandsinformationen (I) des ersten Sensors (10) und den diskreten Zustandsinformationen (I) des mindestens einen zweiten Sensors (12) zu denselben Zeitpunkten (t1, t2) und somit Bestimmen, ob ein intrinsischer Fehler (iF) oder ein extrinsischer Fehler (eF) den ersten Sensor (10) und/oder den mindestens einen zweiten Sensor (12) beeinflusst hat.

11. Verfahren nach mindestens einem der Ansprüche 1 bis 8,
**dadurch gekennzeichnet, dass** das System (16) zum maschinellen Lernen durch einen Algorithmus zum überwachten Lernen trainiert wird.

12. Verfahren nach Anspruch 11, wobei mindestens ein Datenabtastungsverfahren auf Trainingsdaten ausgeführt wird, wobei das Verfahren aus der Gruppe ausgewählt wird, die aus Folgendem besteht: Upsampling, insbesondere über einen SMOTE-Algorithmus, Zufalls-Downsampling und "Preferential Sample"-Gewichtung.

13. Computerprogramm, das Anweisungen umfasst, die dann, wenn das Programm durch einen Computer (22) ausgeführt wird, bewirken, dass der Computer (22) die Schritte des Verfahrens nach Anspruch 1 ausführt.

14. Computerlesbares Speichermedium, das Anweisungen umfasst, die dann, wenn sie durch einen Computer (22) ausgeführt werden, bewirken, dass der Computer (22) die Schritte des Verfahrens nach Anspruch 1 ausführt.

## Revendications

1. Procédé de prédiction d'une défaillance (F) d'au moins un capteur (10, 12), en particulier, de mesure d'au moins un paramètre (P) d'une unité (14) mobile, **caractérisé en ce que** le procédé comprend au moins les stades suivants :
- on se procure, comme donnée (D) d'entrée dans un système (16) d'apprentissage automatique, une information (I) conditionnelle discrète du au moins un capteur (10, 12) à plusieurs instants (t1, t2), dans lequel le au moins un capteur (10, 12) est un capteur choisi dans le groupe consistant en : un capteur (10, 12) radar et un dispositif de mesure laser ; dans lequel l'information (I) conditionnelle discrète se rapporte à une intensité (S) de signal du au moins un capteur (10, 12), dans lequel ces instants (t1, t2) sont des instants où l'information (I) conditionnelle discrète du au moins un capteur (10, 12) a changé et
- on évalue la donnée (D) d'entrée en utilisant le système (16) d'apprentissage automatique et en prédisant ainsi la défaillance (F) du au moins un capteur (10, 12) en utilisant le système (16) d'apprentissage automatique.

2. Procédé suivant la revendication 1, dans lequel le procédé comprend les autres stades dans lesquels :
- on compte un nombre (N) de changements d'état de l'information (I) conditionnelle discrète du au moins un capteur (10, 12) et
- on utilise le nombre (N) de changements d'état de l'information (I) conditionnelle discrète du au moins un capteur (10, 12) comme donnée (D) d'entrée dans le système (16) d'apprentissage automatique.

3. Procédé suivant la revendication 1 ou 2, dans lequel le procédé comprend les autres stades dans lesquels :
- on crée au moins une dérivée (sD) statistique à partir de la donnée (D) d'entrée et
- on utilise la au moins une dérivée (sD) statistique à partir de la donnée (D) d'entrée comme autre donnée (D) d'entrée dans le système (16) d'apprentissage automatique.

4. Procédé suivant l'une quelconque des revendications précédentes, dans lequel l'information (I) conditionnelle discrète se rapporte à une intensité (S) du signal du au moins un capteur (10, 12) dans un mode (M) de fonctionnement du au moins un capteur (10, 12), dans lequel le mode (M) de fonctionnement est choisi dans le groupe consistant en : un mode unique, un mode unique de basse qualité, un mode unique de haute qualité, un mode dual, un mode dual de basse qualité, un mode dual de haute qualité et un mode inconnu.

5. Procédé suivant l'une quelconque des revendications précédentes,
dans lequel
on fait subir un apprentissage au système (16) d'apprentissage automatique par un procédé choisi le groupe consistant en : apprentissage supervisé, apprentissage semi-supervisé, apprentissage non supervisé, apprentissage renforcé et apprentissage actif.

6. Procédé suivant l'une quelconque des revendications précédentes,
dans lequel
le système (16) d'apprentissage automatique travaille suivant un prédicteur arborescent dopé par un gradient extrême.

7. Procédé suivant l'une quelconque des revendications précédentes,
dans lequel
le au moins un capteur (10, 12) mesure au moins un paramètre (P), dans lequel le au moins un paramètre (P) est une vitesse.

8. Procédé suivant l'une quelconque des revendications précédentes,
dans lequel
le au moins un capteur (10, 12) est un capteur d'une unité (14) mobile et/ou dans lequel l'unité (14) mobile est un véhicule (18) guidé sur rail, en particulier un train (20).

9. Procédé suivant l'une quelconque des revendications précédentes de prédiction d'une défaillance (F) d'au moins un premier capteur (10, 12) parmi plusieurs capteurs (10, 12), comprenant un premier capteur (10, 12) et au moins un deuxième capteur (10, 12), dans lequel le procédé comprend au moins les stades dans lesquels :
- on se procure, comme donnée (D) d'entrée dans le système (16) d'apprentissage automatique, une information (I) conditionnelle discrète du premier capteur (10) à plusieurs instants (t1, t2),
- on se procure, comme donnée (D) d'entrée dans le système (16) d'apprentissage automatique, une information (I) conditionnelle discrète du au moins un deuxième capteur (12) aux mêmes instants (t1, t2), dans lequel les instants (t1, t2) sont des instants où l'information (I) conditionnelle discrète d'au moins un capteur (10, 12) parmi le premier capteur (10) et le au moins un deuxième capteur (12) a changé, et
- on évalue la donnée (D) d'entrée du premier capteur (10) et du au moins un deuxième capteur (12) en utilisant le système (16) d'apprentissage automatique et en analysant ainsi un comportement du premier capteur (10) et du au moins un deuxième capteur (12).

10. Procédé suivant la revendication 9, comprenant au moins le stade supplémentaire dans lequel :
- on analyse une défaillance (iF) intrinsèque ou une défaillance (eF) extrinsèque d'au moins l'un des capteurs (10, 12) parmi les plusieurs capteurs (10, 12) en effectuant une comparaison mutuelle entre l'information (I) conditionnelle discrète du premier capteur (10) et l'information (I) conditionnelle discrète du au moins un deuxième capteur (12) aux mêmes instants (t1, t2) et en déterminant ainsi si une défaillance (iF) intrinsèque ou une défaillance (eF) extrinsèque a concerné le premier capteur (10) et/ou le au moins un deuxième capteur (12).

11. Procédé suivant au moins l'une des revendications 1 à 8, **caractérisé en ce que** le système (16) d'apprentissage automatique subit un apprentissage par un algorithme d'apprentissage supervisé.

12. Procédé suivant la revendication 11, dans lequel au moins un procédé d'échantillonnage de données est exécuté sur des données d'apprentissage, dans lequel le procédé est choisi dans le groupe consistant en : un suréchantillonnage, en particulier par un algorithme SMOTE, un sous-échantillonnage aléatoire et une pondération d'échantillon préférentielle.

13. Programme d'ordinateur comprenant des instructions qui, lorsque le programme est exécuté par un ordinateur (22), font que l'ordinateur (22) effectue les stades du procédé suivant la revendication 1.

14. Support de mémoire, déchiffrable par ordinateur, comprenant des instructions qui, lorsqu'elles sont exécutées par un ordinateur (22), font que l'ordinateur (22) effectue les stades du procédé suivant la revendication 1.
